# EUROPEAN PATENT APPLICATION

(11) **EP 1 403 389 A1**
(43) Date of publication of application: **31.03.2004**
(21) Application number: 02751922.2
(22) Date of filing: 20.06.2002
(51) Int. Cl.: C22B 1/242, C22B 1/245

(54) **METHOD FOR PRODUCING BRIQUETTES FROM FINELY DISPERSED METAL OXIDES**

(30) Priority: 03.07.2001 RU 2001118000
(71) Applicant: Zakrytoe Aktsionernoe Obschestvo "Konsultatsionnaya Kompania Konvest", Moscow, 117859 (RU)
(72) Inventor: SIROTKIN, Sergei Nikolaevich, Chelyabinsk, 454046 (RU); ALEXANDROV, Valentin Nikolaevich, Chelyabinsk, 454139 (RU); BLINOV, Jury Ivanovich, Chelyabinsk, 454000 (RU); KUZNETSOV, Viktor Konstantinovich, Sverdlovskaya obl., 623102 (RU); BERSENEV, Aleksei, Arkadievich, Sverdlovskaya obl., 623102 (RU)
(74) Representative: Lins, Edgar, Dipl.-Phys. Dr.jur.
(86) International application number: PCT/RU2002/000303
(87) International publication number: WO 2003/004710

(57) **Abstract**

The Invention relates to metallurgy and can be used for preparing iron-ore raw material for a subsequent reduction in blast and other furnaces, thereby replacing pellet and agglomerate. The invention method for producing briquettes from finely dispersed metal oxides for reducing by heat treatment in a gas atmosphere consists in mixing the oxides with a water solution of liquid glass and reduction hydrocarbons at a boiling temperature higher than 300°C and in pressing obtained product.

## Description

### Field of the invention

The invention relates to metallurgy and can be used for preparing iron-ore for subsequent reduction of in blast and other furnaces of pellets and agglomerates.

### Background of the invention

Well known in the art are methods of briquetting finely dispersed oxides for subsequent reduction by heat treatment in a reducing atmosphere, in which organic matter is used as a binder (tar, resins, polyvinyl acetate glue).

However the obtained briquettes loose strength under heat treatment conditions and are unsuitable for blast furnace metal production.

Also known in the art are methods for producing briquettes, in which the binder consists of inorganic materials (lime, cement, glass).

The use liquid glass solution as a binder has an advantage, Because it is a catalyst of reducing the oxides. It is due to the fact that the caustic soda contained to the liquid glass in the process of reduction reacts with the metal oxides.
An essential disadvantage of inorganic binders is a low reduction capacity of the briquettes. It is connected with the fact that these binders in process of strengthening constrains water in the form of crystallohydrates. Even if the heat treatment of the briquettes and removal of this moisture from the briquette, the moisture is again absorbed by the briquette and in the process of thermal processing during the reduction of the briquette interferes with infiltration of reducer into the briquette.
Besides, the briquetting with the inorganic binder results in an increase of the amount of slag and, respectively, to an increase of the coke.

The most relevant technical solution taken as a prior art is a method for producing briquettes from commercial dispersed materials (RU patent No. 7865, C 22 B 1/243. 1993) whose essence consists in that a solution of liquid glass is used as a binder, by means of which the mixture is preliminarily granulated, dried by blowing it with carbonic acid gas, then briquettes are pressed and dried.

The disadvantage of this method is a low strength of the pressed briquettes due to high humidity and a necessity of drying the briquettes, as well as in a low reduction rate during the heat treatment of the briquettes due to insufficient porosity of the briquette having a high concentration of oxidizers therein.

### Disclosure of the invention

The technical problem to be solved by the invention is to increase the recovery rate of the briquettes during the heat treatment in a gaseous atmosphere with higher strength and heat resistance of the briquettes while reducing the power consumption.

This object is attained in a method for producing briquettes from finely dispersed metal oxides for reducing by heat treatment in a gas atmosphere consists in mixing the oxides with a water solution of liquid glass with subsequent pressing; according to the invention, reduction hydrocarbons at a boiling temperature higher than 300°C are added to the mixture to be pressed.

The amount of hydrocarbons in the mixture to be pressed is preferably 1-6 percent by weight and used mineral oils are preferable used as said hydrocarbons.

This task can be achieved stemming from the properties of the metal oxide system: water solution of liquid glass - liquid hydrocarbons.

The water solution of liquid glass, when mixed with liquid hydrocarbons, readily forms a stable emulsion - dispersed hydrocarbons in liquid glass

In the process of pressing the spaces between the oxide particles is filled with emulsion. After the external phase (liquid glass) has been solidified, the oxide particles are interconnected by not a monolithic binder but by a skeleton of a binder agent. The skeleton strength can be varied by varying the contents of the internal phase of the emulsion - hydrocarbon.

In so doing the consumption of liquid glass is reduced. An introduction of reduction hydrocarbons into the mixture of oxides in liquid glass dilutes this mixture and this allows one to use more concentrated solutions of liquid glass. In this case, the moisture content in the briquette is reduced while the pressing capacity and the strength of the pressed briquette increases to such an extent that the pressing process can be effected at a high rate. Furthermore, the high strength of the briquettes allows one to perform the following operations (transportation and storage of the briquettes) without their thermal hardening. The briquettes are dense but sufficiently porous for ordering. As the moisture evaporates and a silicate skeleton is formed, micropores are formed in the briquette, which are filled with hydrocarbons imparting reduction properties to the briquette. Even with complete submersion of the briquette in water only large pores are filled with water.

The recovery of a briquette is determined as percent of oxygen removed from the briquette per unit of time, i.e. the shorter the time of complete recovery of the briquette, the higher the recovery rate.

On recovering the oxides in the process of heating the briquettes in a gas atmosphere to a temperature of 300°C, the absorbed water is removed first and then the recrystallized water is removed. Upon reaching the hydrocarbon boiling temperature, their excess is removed from the briquettes, a part of the hydrocarbons being oxidized by the residual moisture contained in the briquettes forming soot carbon.

After the excessive hydrocarbons have been removed from the briquettes, they acquire high gas permeability without loss of strength. Some hydrocarbons remains in the briquettes and taking part in the recrystallization process.

It is well known that the caustic soda contained in liquid glass catalyzes the process of oxide reduction. In a combination with high gas permeability of the briquettes this property provides high reduction rate of the briquettes.

When liquid hydrocarbons with a boiling rate below 300°C are used for the process of briquetting, the reduction capacity of the briquettes drops down. This is due to the fact that the hydrocarbons are removed from the briquettes prior to removing the bound water and carbonic acid. In addition, high volatility of hydrocarbons with a boiling temperature below 300°C, therefore, their fire risk and toxicity after the briquetting increases by a factor of 5 to 10. An increase of the content of binder in the briquettes made according to prior art is associated with the fact that no granulation takes place at a low binder content. The strength of the briquettes made by the claimed method overcomes those made according to prior art by 2-3 times. The water absorption decreases by a factor of 5 to 10 compared to the prior art. The time of reduction decreases by 3-4 times.
- As follows from the graphic dependence on the time of reduction of the briquette in an carbon oxide atmosphere at a temperature of 1000°C and crushing strength at 20°C depending on the contents of various hydrocarbon mixtures in the briquette after 24-hour exposure the hardness of the briquette containing hydrocarbons according to the claimed method rises up to a content of hydrocarbons in the briquette of 4% and after 5% of quickly decreases. The time of reduction decreases with an increase of the contents of hydrocarbons in the briquette.

If liquid hydrocarbons are used (diesel oil) at a temperature of 300°C, the reducibility of the briquettes is reduced.

Thus, the introduction of liquid hydrophobic hydrocarbons even in a small amount results in a significant increase of the rate of reduction of metals oxides at an increase of strength, moisture resistance of the briquettes and a low power inputs in the process of briquetting.

### Industrial applicability

The proposed method of production of briquettes can be used for processing and recycling of a waste of the metallurgical production, in particular, greasy and clean scale, degreased finely dispersed ores.

**Table 1**

| DURATION OF TECHNOLOGICAL OPERATION | | |
|---|---|---|
| Briquettes of finely dispersed scale (fractions of 50-100 microns) 50 mm in diameter and 30 mm high | | |
| Parameter | Technology | |
| | Prior art | Claimed |
| Time of operations (minutes) Mixing oxides with hydrocarbons (4 wt.%) and liquid glass solution | | 4 |
| Granulation | 4 | - |
| Blowing | 4 | - |
| Pressing (30 tons per briquette) | 1 | 0.05 |
| Drying at a temperature of 250°C | 120 | - |

**Table 1**

| QUALITY CHARACTERISTICS OF BRIQUETTES | | | |
|---|---|---|---|
| Parameter | Technology | | |
| | Prior art | Claimed | |
| | | with addition of used engine oil, 4 wt. % | with addition of used machine oil, 4 wt. % |
| Content of SiO₂ in briquettes Compression strength of kg/briquette | 2-4 | 1-2 | 1-2 |
| After pressing | 5-10 | 55-60 | 60-70 |
| After 2-hour exposure at 250°C | 300-500 | - | - |
| After 2-hour exposure at 20°C | - | 220-260 | 250-300 |
| After 24-hour exposure at 20°C | - | 700-800 | 900-1000 |
| After 72-hour exposure at 20°C | - | 1100-1200 | 1200-1400 |
| After 2-hour exposure at 85°C | - | 1100-1200 | 1200-400 |
| Water absorption at immersion in water, % | 10-15 | 1-2 | 1.5-3 |
| Briquette density, g/cm³ | 3.5 | 3.6 | 3.8 |
| Rate of reduction at 1000°C, hours | 11-12 | 3.0-4.0 | 3-0-4.0 |

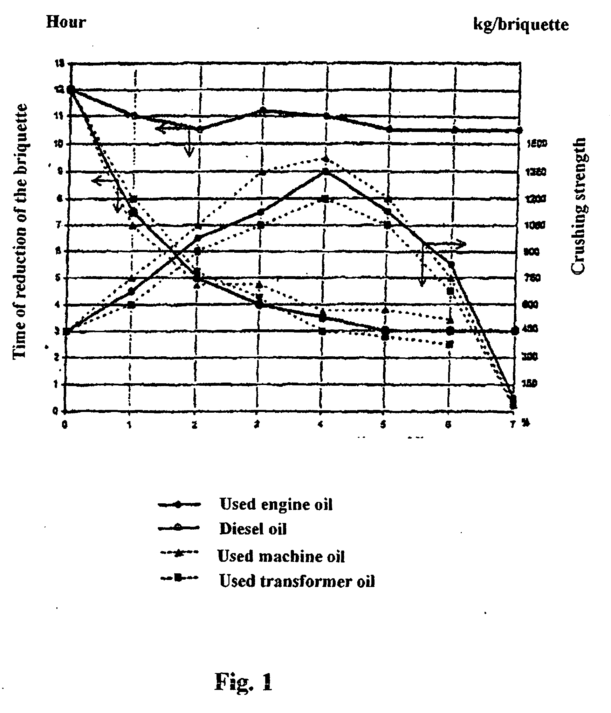

## Claims

1. A method for producing briquettes from finely dispersed metal oxides for reducing by heat treatment in a gas atmosphere consists in mixing the oxides with a water solution of liquid glass with subsequent pressing; **characterized in that** hydrophobic hydrocarbons having a boiling temperature higher than 300°C are added to the mixture to be pressed.

2. A method for producing briquettes from finely dispersed metal oxides for reducing by heat treatment in a gas atmosphere according to claim 1, **characterized in that** the amount of hydrocarbons in the mixture to be pressed is 1 to 6 percent by weight.

3. A method for producing briquettes from finely dispersed metal oxides for reducing by heat treatment in a gas atmosphere according to claim 1, **characterized in that** used mineral oils are used as said hydrocarbons.
